# EUROPÄISCHE PATENTSCHRIFT

(11) **EP 2 523 853 B1**
(45) Veröffentlichungstag und Bekanntmachung des Hinweises auf die Patenterteilung: **01.07.2015**
(21) Anmeldenummer: 11700187.5
(22) Anmeldetag: 14.01.2011
(51) Int. Cl.: H04B 1/52, B64D 11/00, H04B 1/00

(54) **VORRICHTUNG ZUM BEREITSTELLEN VON RADIOFREQUENZSIGNALVERBINDUNGEN IN EINEM FLUGZEUG**
DEVICE FOR PROVIDING RADIO FREQUENCY SIGNAL CONNECTIONS ON AN AIRPLANE
DISPOSITIF PERMETTANT D'OBTENIR DES LIAISONS PAR SIGNAUX DE RADIOFRÉQUENCE DANS UN AVION

(30) Priorität: 14.01.2010 US 294985 P; 14.01.2010 DE 102010000909
(43) Veröffentlichungstag der Anmeldung: 21.11.2012
(73) Patentinhaber: Airbus Operations GmbH, 21129 Hamburg (DE)
(72) Erfinder: SCHIRRMACHER, Martin, 21614 Buxtehude (DE); FROHN, Andreas, 22609 Hamburg (DE)
(74) Vertreter: Isarpatent
(86) Internationale Anmeldenummer: PCT/EP2011/050467
(87) Internationale Veröffentlichungsnummer: WO 2011/086160

(56) Entgegenhaltungen:
- EP-A1- 2 017 966
- WO-A1-02/101995
- WO-A1-2009/046228
- DE-A1-102006 036 082
- US-A1- 2009 100 476

## Beschreibung

Die Erfindung betrifft eine Vorrichtung zum Bereitstellen von Radiofrequenzsignalverbindungen, insbesondere von WLAN-Verbindungen, für Benutzer, die sich in einer Passagierkabine eines Luftfahrzeuges befinden.

In Luftfahrzeugen, insbesondere Flugzeugen, werden zunehmend drahtlose funkgebundene Übertragungssysteme eingesetzt, die der Kommunikation innerhalb des Flugzeuges während des Fluges, oder wenn sich das Flugzeug am Boden befindet dienen. Die Kommunikationspartner sind Passagiere oder Besatzungsmitglieder, die sich z.B. in der Passagierkabine des Flugzeuges befinden. Die Passagiere möchten während des Fluges mit ihren tragbaren Endgeräten, wie beispielsweise Laptops, Smartphones, Mobilfunkgeräten oder PDAs verschiedene Datendienste nutzen, wobei Daten zu übertragen sind. Die Endgeräte der Nutzer übertragen dabei Daten über eine Funkschnittstelle und eine Sende- und Empfangsantenne, die in der Passagierkabine vorgesehen ist, an ein Übertragungssystem des Flugzeuges, welches während des Fluges beispielsweise mittels einer Satellitenverbindung mit einer Bodenstation in Verbindung steht. Über die Luftschnittstelle zwischen der Sende- und Empfangsantenne der Passagierkabine und den Endgeräten erfolgt die Datenübertragung mittels Radiofrequenzsignalen in vorgegebenen Radiofrequenzbändern. Beispielsweise werden zur Bereitstellung von WLAN-Diensten Radiofrequenzsignale in vorgegebenen WLAN-Frequenzbändern gesendet oder empfangen. Da das zur Verfügung stehende Frequenzspektrum begrenzt ist, werden Radiofrequenzbänder für verschiedene Dienste zunehmend in gedrängter Form aneinander gereiht, wobei in vielen Fällen keine ausgeprägten Guard-Bänder bzw. Schutzfrequenzbänder zwischen den verschiedenen Radiofrequenzbändern vorgesehen sind.

In einem Flugzeug ist es notwendig, die Radiofrequenzsignale, die in verschiedenen zum Teil eng aneinander anliegenden Radiofrequenzbändern übertragen werden, auf eine gemeinsame Sende- und Empfangsantenne zusammenzuführen, die in der Passagierkabine vorgesehen bzw. verlegt ist.

Die Druckschrift DE 10 2006 036 082 A1 offenbart eine Kontrollvorrichtung, die das Innere eines Flugzeugs von eindringenden Signalen abschirmt. Dazu weist sie eine Empfangseinrichtung, eine Störeinrichtung und eine Sendeeinrichtung auf. Mit der Empfangseinrichtung werden Sendesignale empfangen, woraus ein Störsignal ermittelt wird, um das Sendesignal zu stören. Dieses Störsignal wird über die Sendeeinrichtung abgestrahlt.

Die Druckschriften US 2009/0100476 A1 und WO 02/101995 A1 offenbaren flugzeuginterne Kommunikationssysteme.

Es ist daher eine Aufgabe der vorliegenden Erfindung, eine Vorrichtung und ein Verfahren zur Bereitstellung von Radiofrequenzsignalverbindungen für Nutzer zu schaffen, bei der die übertragenen Radiofrequenzsignale ohne Einschränkung ihrer Performance und ohne eine negative gegenseitige Beeinflussung über eine gemeinsame Sende- und Empfangsantenne abgegeben bzw. empfangen werden können.

Diese Aufgabe wird erfindungsgemäß durch eine Vorrichtung mit den im Patentanspruch 1 angegebenen Merkmalen gelöst.

Ein Vorteil der erfindungsgemäßen Vorrichtung besteht deshalb darin, dass durch die Verwendung von zwei verschiedenen Filtern, nämlich einem Kanalfilter und einem damit verbundenen Bandpassfilter, eine notwendige Filtersteilheit für jedes der beiden Filter zum Erreichen einer vorgegebenen Stoppbanddämpfung relativ gering sein kann und somit der schaltungstechnische Aufwand zur Implementierung derartiger Filter relativ gering ist. Darüber hinaus weisen die Kanalfilter bzw. die Bandpassfilter, welche jeweils nur eine relativ geringe Filtersteilheit besitzen müssen, eine geringe Baugröße auf und können so in einem vorhandenen Bauraum, beispielsweise in einem Flugzeug untergebracht werden. Darüber hinaus weisen derartige Filter ein relativ geringes Gewicht auf, so dass beispielsweise bei einem Einbau in ein Flugzeug hierdurch Treibstoff eingespart werden kann.

Ein weiterer Vorteil dieser Ausführungsform mit einer Filtereinrichtung, die für jeden Signalpfad ein Kanalfilter und ein Bandpassfilter aufweist, besteht darin, dass diese Filter für andere Zwecke bereits implementiert sind und durch geschickte Verschaltung zusätzlich für die Isolation der Radiofrequenzbänder voneinander und zur Isolation der Radiofrequenzbänder von vorgegebenen Mobilfunk-Frequenzbändern eingesetzt werden.

Bei einer Ausführungsform der erfindungsgemäßen Vorrichtung ist die Sende- und Empfangsantenne in der Passagierkabine des Flugzeuges vorgesehen und stellt WLAN-Verbindungen für Endgeräte von in der Passagierkabine befindlichen Passagieren oder Besatzungsmitgliedern bereit.

Bei einer Ausführungsform der erfindungsgemäßen Vorrichtung weisen die Mobilfunk-Frequenzbänder Mobilfunkrauschbänder auf, in denen Rauschsignale gesendet werden, die Mobilfunkverbindungen der in der Passagierkabine befindlichen Endgeräte mit terrestrischen Basisstationen verhindern.

Bei einer Ausführungsform der erfindungsgemäßen Vorrichtung sind die für die verschiedenen Radiofrequenzbänder vorgesehenen Sende- und Empfangssignale über Richtkoppler zusammengeführt, die mit mindestens einer gemeinsamen Sende- und Empfangsantenne verbunden sind.

Bei einer Ausführungsform der erfindungsgemäßen Vorrichtung sind die Richtkoppler sogenannte 3 dB Richtkoppler.

Bei einer Ausführungsform der erfindungsgemäßen Vorrichtung werden die 3 dB Richtkoppler durch Hybridkombinationsschaltungen gebildet.

Bei einer alternativen Ausführungsform der erfindungsgemäßen Vorrichtung werden die 3 dB Richtkoppler durch sogenannte Lange-Koppler gebildet.

Bei einer weiteren Ausführungsform der erfindungsgemäßen Vorrichtung sind die 3 dB Richtkoppler Wilkinson-Koppler.

Bei einer Ausführungsform der erfindungsgemäßen Vorrichtung weisen die Bandpassfilter gekoppelte Hohlraumresonatoren bzw. Cavity-Filter oder keramische Leitungsresonatoren auf.

Bei einer Ausführungsform der erfindungsgemäßen Vorrichtung sind die Zugangspunkte in dem Flugzeug vorgesehen und über ein Netzwerk an einem Flugzeugserver angeschlossen, der über eine Satellitenstrecke mit einer Bodenstation verbunden ist.

Bei den Zugangspunkten handelt es sich um WLAN-Zugangspunkte (WLAN-Accesspoints).

Bei einer Ausführungsform der erfindungsgemäßen Vorrichtung sind in den WLAN-Frequenzbändern WLAN-Service Signale nach dem Standard IEEE 802.11g oder IEEE 802.11b übertragbar.

Beispielsweise sind die Radiofrequenzbänder, insbesondere die WLAN-Frequenzbänder, der zugangspunkte, insbesondere der WLAN-Zugangspunkte, nicht überlappende Frequenzbänder, insbesondere nicht überlappende WLAN-Frequenzbänder.

Bei einer Ausführungsform der erfindungsgemäßen Vorrichtung sind die Bandpassfilter verschiedener Sende- und Empfangssignalpfade in unterschiedlichen Bandpassfiltergruppen vorgesehen.

Bei einer Ausführungsform der erfindungsgemäßen Vorrichtung sind die beiden Ausgänge eines Richtkopplers jeweils mit einer zugehörigen Sende- und Empfangsantenne verbunden.

Bei einer Ausführungsform der erfindungsgemäßen Vorrichtung ist die Sende- und Empfangsantenne eine Leckleitungsantenne, die in der Passagierkabine des Flugzeuges verlegt ist.

Bei einer Ausführungsform der erfindungsgemäßen Vorrichtung ist an einem Ende der Leckleitungsantenne eine Messeinrichtung vorgesehen, welche die Signalleistung von Hochfrequenzsignalen an einem Ende der Leckleitungsantenne misst.

Bei einer Ausführungsform der erfindungsgemäßen Vorrichtung werden in den Sende- und Empfangssignalpfaden jeweils Daten mit einer Datenübertragungsrate von bis zu 54 MBit/s übertragen.

Beispielsweise weist eine aus einem Kanalfilter und einem Bandpassfilter bestehende Filtereinrichtung eine Stoppbanddämpfung von mehr als 50 dB, vorzugsweise von mehr als 70 dB, auf. Diese Stoppbanddämpfung erlaubt den gleichzeitigen Betrieb aller Zugangspunkte mit einer maximalen Datenübertragungsrate von bis zu 54 Mbit/s.

Bei einer Ausführungsform der erfindungsgemäßen Vorrichtung sind die Kanalfilter zur Trennung der Radiofrequenzbänder voneinander in einer UWBS(Universal Wireless Backbone System)-Einheit bzw. RF-Kombinationseinheit vorgesehen.

Bei einer Ausführungsform der erfindungsgemäßen Vorrichtung sind die Bandpassfilter zur Isolation der Radiofrequenzbänder von Mobilfunk-Frequenzbändern in einer OBCE(On Board Control Equipment)-Einheit des Flugzeuges vorgesehen.

Bei einer Ausführungsform der erfindungsgemäßen Vorrichtung sind drei Zugangspunkte, insbesondere drei WLAN-Zugangspunkte vorgesehen, die jeweils Radiofrequenzsignale, insbesondere WLAN-Signale, in einem zugehörigen Radiofrequenzband, insbesondere einem WLAN-Frequenzband, senden oder empfangen, wobei die drei Radiofrequenzbänder, insbesondere WLAN-Frequenzbänder, drei nicht überlappende Radiofrequenzbänder, insbesondere IEEE 802.11 WLAN-Frequenzbänder, sind, die jeweils eine Frequenzbandbreite von 20 MHz aufweisen.

Bei einer Ausführungsform der erfindungsgemäßen Vorrichtung weisen die Richtkoppler zwei Ausgänge auf, die jeweils über einen Triplexer mit einer Sende-/Empfangsantenne verbunden sind.

Bei einer möglichen Ausführungsform der erfindungsgemäßen Vorrichtung sind die Mobilfunk-Frequenzbänder 4G-Mobilfunkfrequenzbänder.

Beispielsweise kann ein Flugzeug, insbesondere ein Passagierflugzeug, oder ein sonstiges Luftfahrzeug, beispielsweise einen Helikopter, mit mindestens einer Vorrichtung zur Bereitstellung von Radiofrequenzsignalverbindungen für Nutzer vorgesehen sein, wobei das Flugzeug mehrere Zugangspunkte aufweist, die Radiofrequenzsignale in verschiedenen vorgegebenen Radiofrequenzbändern senden oder empfangen und jeweils über einen Sende- und Empfangssignalpfad mit mindestens einer gemeinsamen Sende- und Empfangsantenne, die in einer Passagierkabine des Flugzeuges verlegt ist, verbunden sind, wobei in den Sende- und Empfangssignalpfaden jeweils Filtereinrichtungen vorgesehen sind, welche die Radiofrequenzbänder voneinander und von vorgegebenen Mobilfunkfrequenzbändern isolieren.

Im Weiteren werden Ausführungsbeispiele der erfindungsgemäßen Vorrichtung zur Bereitstellung von Radiofrequenzsignalverbindungen unter Bezugnahme auf die beigefügten Figuren beschrieben.

Es zeigen:
- Fig. 1: ein Blockschaltbild zur Darstellung einer ersten möglichen Ausführungsform der erfindungsgemäßen Vorrichtung;
- Fig. 2: ein weiteres Blockschaltbild einer zweiten möglichen Ausführungsform der erfindungsgemäßen Vorrichtung;
- Fig. 3A, 3B: Frequenzspektren zur Erläuterung eines möglichen Ausführungsbeispiels der erfindungsgemäßen Vorrichtung;
- Fig. 4: eine Tabelle möglicher Frequenzbänder zur Erläuterung einer möglichen Ausführungsform der erfindungsgemäßen Vorrichtung.

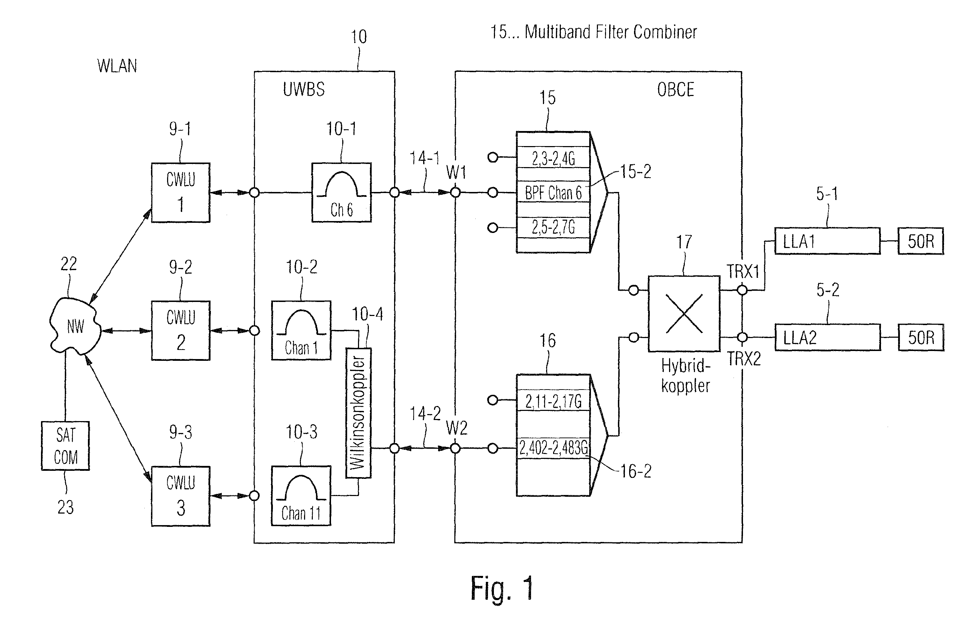

Wie man aus dem Blockschaltbild in Fig. 1 erkennen kann, ist die erfindungsgemäße Vorrichtung zur Bereitstellung von Radiofrequenzsignalverbindungen in einem Fahrzeug, insbesondere in einem Luftfahrzeug, beispielsweise einem Passagierflugzeug, vorgesehen. Das Flugzeug weist eine Passagierkabine auf, in der sich Flugzeugpassagiere und Besatzungsmitglieder befinden können. Die Passagiere und Besatzungsmitglieder verfügen über mobile Endgeräte, wie beispielsweise Handys, Smartphones, Laptops, PDAs und dergleichen. In der Passagierkabine ist ferner mindestens eine Sende- und Empfangsantenne 5-i vorgesehen. Bei dem in Fig. 1 dargestellten Ausführungsbeispiel sind in der Passagierkabine zwei Sende- und Empfangsantennen 5-1, 5-2 vorgesehen. Diese Sende- und Empfangsantennen 5-1, 5-2 sind in der Passagierkabine verlegt. Bei der Sende- und Empfangsantenne 5-i kann es sich beispielsweise um eine sogenannte Leckleitungsantenne bzw. Leakyline-Antenne handeln. Die mobilen Endgeräte innerhalb der Kabine können über Luftschnittstellen mit der Leckleitungsantenne 5-i Daten austauschen.

Bei der in Fig. 1 dargestellten Ausführungsform sind die beiden Sende- und Empfangsantennen 5-1, 5-2 direkt an die OBCE-Einheit angeschlossen. Bei dem in Fig. 1 dargestellten Ausführungsbeispiel dient die erste Sende- und Empfangsantenne 5-1 zum Senden und Empfangen von Radiofrequenzsignalen, insbesondere WLAN-Frequenzsignalen, die beispielsweise im 2 GHz-Bereich liegen. Für die WLAN-Signale, die in anderen Frequenzbereichen liegen, kann die Antenne 5-1 auch als Sendeantenne dienen. Die zweite Antenne 5-2 dient für Radiofrequenzsignale, welche im 2 GHz-Bereich liegen, als Sende- und Empfangsantenne. Für Radiofrequenzsignale, die in anderen Frequenzbereichen liegen, kann die Antenne 5-2 als Empfangsantenne dienen.

Die erfindungsgemäße Vorrichtung ist bei dem dargestellten Ausführungsbeispiel von Bedeutung bei der Bereitstellung von Radiofrequenzsignalverbindungen in dem 2 GHz-Bereich. Diese Radiofrequenzsignale bzw. WLAN-Signale im 2 GHz-Bereich stammen bei dem dargestellten Ausführungsbeispiel von Zugangspunkten 9-1, 9-2, 9-3. Bei diesen Zugangspunkten 9-i handelt es sich vorzugsweise um WLAN-Zugangspunkte bzw. WLAN-Access Points (AP). Die in dem 2 GHz-Frequenzbereich zu übertragenen WLAN-Signale werden über eine bidirektionale Signalverbindung 10-i zwischen einer UWBS(Universal Wireless Backbone System)-Einheit 10 und dem jeweiligen WLAN-Zugangspunkt 9-i ausgetauscht. Wie in Figur 1 dargestellt sind die WLAN-Zugangspunkte 9-1, 9-2, 9-3 über Signalverbindungen an die UWBS-Einheit 10 angeschlossen. Bei den bidirektionalen Signalverbindungen kann es sich beispielsweise um Koaxialkabel handeln. Die WLAN-Zugangspunkte 9-i bzw. Accesspoints können in einem Rack des Flugzeuges eingebaut sein.

Die von den WLAN-Zugangspunkten 9-1, 9-2, 9-3 in dem 2 GHz-Bereich abgegebenen WLAN-Signale, die in vorgegebenen WLAN-Frequenzbändern liegen, werden in der UWBS-Einheit 10 durch darin integrierte Kanalfilter 10-1, 10-2, 10-3 gefiltert. Bei diesen Kanalfiltern 10-1, 10-2, 10-3 kann es sich um analoge Bandpassfilter für das jeweilige Radio bzw. WLAN-Frequenzband handeln.

Bei den WLAN-Frequenzbändern kann es sich beispielsweise um IEEE 802.11g oder IEEE 802.11b Frequenzbänder handeln. Bei dem in Fig. 1 dargestellten Beispiel gibt der WLAN-Accesspoint 9-1 ein WLAN-Signal in einem Kanal 6 an ein dafür vorgesehenes Kanalfilter 10-1 ab. Weiterhin gibt der WLAN-Zugangspunkt 9-2 ein WLAN-Signal in einem Kanal 1 an ein dafür vorgesehenes Kanalfilter 10-2 ab. Der dritte WLAN-Zugangspunkt 9-3 gibt ein WLAN-Signal in einem Kanal 11 an das zugehörige Kanalfilter 10-3 innerhalb der UWBS-Einheit 10 ab. Bei den in den Kanälen 1, 6, 11 abgegebenen WLAN-Signalen handelt es sich somit um WLAN-Signale, die in nicht überlappenden Frequenzbändern liegen. Die verschiedenen WLAN-Frequenzbänder weisen bei der dargestellten Ausführungsform eine Frequenzbandbreite von etwa 20 MHz auf, wobei die verschiedenen WLAN-Kanäle jeweils um 5 MHz zueinander versetzt sind. Daher weisen die WLAN-Kanäle 1, 6 und 11 keine Überlappung auf. Die UWBS-Einheit 10 weist somit drei WLAN/b/g-Kanalfilter 10-1, 10-2, 10-3 für die Kanäle 6, 1, 11 auf. Die WLAN-Kanäle 1, 11 werden nach ihrer jeweiligen Kanalfilterung durch die Kanalfilter 10-2, 10-3 bei der in Fig. 1 dargestellten Ausführungsform durch einen 2:1 Signalkombinierer 10-4 an ein Port (W2) der OBCE-Einheit geführt. Bei dem in Fig. 1 dargestellten Ausführungsbeispiel weist die OBCE-Einheit zwei Ports W1, W2 auf, die mit der UWBS-Einheit 10 verbunden sind. Die Verbindungen zwischen der UWBS-Einheit 10 und der OBCE-Einheit können mit Hilfe von Steckverbindern 14-1, 14-2 hergestellt werden.

Die OBCE-Einheit enthält Bandpassfilter zur Isolation der Radiofrequenzbänder, insbesondere WLAN-Frequenzbänder, von Mobilfunkfrequenzbändern.

Bei dem in Fig. 1 dargestellten Ausführungsbeispiel enthält die OBCE-Einheit zwei Bandpassfiltergruppen 15, 16. In jeder Bandpassfiltergruppe 15, 16 sind mehrere Bandpassfilter 15-i, 16-i vorgesehen. Diese Bandpassfilter isolieren die WLAN-Frequenzbänder von Mobilfunkfrequenzbändern, beispielsweise von 4G-Mobilfunkfrequenzbändern. In den Mobilfunkfrequenzbändern können Servicesignale, aber auch Rauschsignale übertragen werden. In Mobilfunkrauschbändern werden Rauschsignale gesendet, die Mobilfunkverbindungen der in der Passagierkabine befindlichen Endgeräte mit terrestrischen Basisstationen verhindern. Ein in dem Flugzeug 2 befindliches OMTS (On Board Mobile Telephone System) unterstützt Frequenzbereiche, die in dieser Weise mit einem Rauschsignal beaufschlagt werden. Dazu zählen unter anderem ein Frequenzbereich von 2,3 bis 2,4 GHz sowie ein Frequenzbereich von 2,5 bis 2,7 GHz. Diese beiden Frequenzbereiche schließen sich fast nahtlos an einen WLANb/g-Frequenzbereich von 2,402 bis 2,483 GHz an, der von den CWLU(Cabin Wireless LAN Unit)-Einheiten bzw. WLAN-Zugangspunkten 9-i benutzt wird. Ferner hat die in Fig. 1 dargestellte Bandpassfiltergruppe 15 ein Bandpassfilter 15-1 in einem Frequenzbereich von 2,3 bis 2,4 GHz. Dieser Frequenzbereich ist ein Rauschfrequenzbereich zur Aussendung von Rauschsignalen bzw. Maskierungssignalen für Mobilfunkgeräte. Weiterhin ist in der Bandpassfiltergruppe 15 ein Bandpassfilter 15-2 für den WLAN-Kanal 6 vorgesehen. Darüber hinaus erkennt man ein drittes Bandpassfilter 15-3 für den Frequenzbereich von 2,5 bis 2,7 GHz, wobei in diesem Frequenzbereich ebenfalls Rauschsignale zur Maskierung von Mobilfunkverbindungen gesendet werden. In der zweiten Bandpassfiltergruppe 16 ist ebenfalls ein Bandpassfilter 16-1 vorgesehen, welches bei dem dargestellten Bereich einen Frequenzbereich von 2,11 bis 2,17 GHz abdeckt. Dieser Frequenzbereich ist ein Rauschfrequenzband für UMTS Telefonie. Die zweite Bandpassfiltergruppe 16 enthält ferner ein Bandpassfilter 16-2 für den WLAN-Kanal 1 und den WLAN-Kanal 11, der für die von den WLAN Accesspoints 9-2, 9-3 im 2 GHz-Bereich abgegebenen WLAN-Signale vorgesehen ist. Bei dem in Fig. 1 dargestellten Ausführungsbeispiel ist ein gemeinsames Bandpassfilter 16-2 für die beiden über den Kombinierer 10-4 zusammengeführten WLAN-Kanäle 1, 11 vorgesehen. Bei einer alternativen Ausführungsform ist in der Bandpassfiltergruppe 16 für jeden der beiden WLAN-Kanäle 1, 11 jeweils ein eigenes Bandpassfilter vorgesehen.

Die OBCE-Einheit des Flugzeuges weist mindestens einen Richtkoppler 17 auf. Bei dem Richtkoppler 17 handelt es sich vorzugsweise um einen 3 dB Richtkoppler. Bei einer möglichen Ausführungsform ist der 3 dB Richtkoppler eine sogenannte Hybridkombinationsschaltung. Bei einer alternativen Ausführungsform ist der 3 dB Richtkoppler 17 ein sogenannter Lange-Koppler.

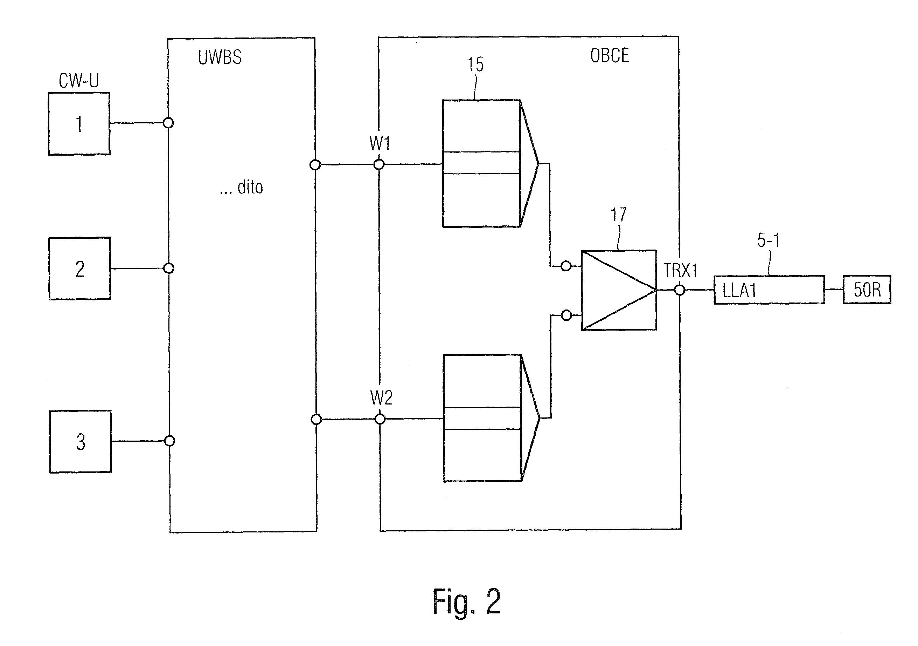

Bei einer weiteren Ausführungsform, wie sie in Fig. 2 dargestellt ist, kann der Richtkoppler 17 auch durch einen Wilkinson-Koppler gebildet werden.

Mit dem Richtkoppler 17 können Signale nach ihrer Ausbreitungsrichtung in einem Leiter getrennt ausgekoppelt werden. Ein Richtkoppler hat normalerweise vier Ports oder Tore. Ein Signal bzw. eine Signalwelle, die an einem Tor des Richtkopplers eingespeist wird, teilt sich auf die zwei Tore der gegenüberliegenden Seite des Richtkopplers 17 entsprechend der Symmetrieachse in einem vorgegebenen Verhältnis auf, wobei an dem anderen Tor auf der gleichen Seite, bei der auch die Signaleinspeisung erfolgt, eine Auskopplung erfolgt. Die Signalleitung, die an einem Tor eingespeist wird, wird auf die zwei Ausgabetore des Richtkopplers 17 aufgeteilt. Bei einer bevorzugten Ausführungsform führen die Richtkoppler 17 jeweils eine gleichmäßige Aufteilung der Signalleistung auf die beiden Ausgangstore durch. Auf diese Weise wird das Signal an beiden Ausgangstoren um 3 dB gedämpft und es handelt sich in diesem Falle um sogenannte 3 dB Richtkoppler. Bei der in Fig. 1 dargestellten Ausführungsform ist der Richtkoppler 17 für einen bestimmten Frequenzbereich vorgesehen. Bei einer möglichen Ausführungsform ist der erste Richtkoppler 17 für einen Frequenzbereich von 1,5 bis 2,7 GHz vorgesehen. Der Richtkoppler 17 weist zwei Ausgänge auf. Diese beiden Ausgänge können über einen Triplexer mit den Sende- und Empfangsantennen 5-1, 5-2 verbunden sein.

An die OBCE-Einheit können ferner Basisstationen für Mobilfunk- bzw. GSM-Übertragung angeschlossen sein.

Bei einer möglichen Ausführungsform sind die Zugangspunkte 9-i, insbesondere WLAN-Zugangspunkte 9-i, über ein Netzwerk 22 an einen Flugserver 23 angeschlossen, der über eine Satellitenstrecke mit einer Bodenstation 25 verbunden ist.

Die erfindungsgemäße Vorrichtung weist somit mehrere Zugangspunkte 9-i auf, die Radiofrequenzsignale, insbesondere WLAN-Signale, in verschiedenen Radiofrequenzbändern senden oder empfangen und jeweils über einen Sende- und Empfangssignalpfad mit mindestens einer gemeinsamen Sende- und Empfangsantenne 5-i verbunden sind. Beispielsweise ist der WLAN-Zugangspunkt 9-i in einem Signalpfad über ein Kanalfilter 10-1, die Steckverbindung 14-1, das Bandpassfilter 15-2, den Richtkoppler 17, und ggf. über einen Triplexer sowie ein Tiefpassfilter mit der Sende- und Empfangsantenne 5-1 verbunden. Die beiden übrigen WLAN-Zugangspunkte 9-2, 9-3 sind in einem weiteren Signalpfad über Kanalfilter 10-2, 10-3 sowie die Signalkombinationsschaltung 10-4, die Steckverbindung 14-2, das Bandpassfilter 16-2, den Richtkoppler 17 und ggf. einen Triplexer und ein Tiefpassfilter mit der gleichen Sende- und Empfangsantenne 5-1 wie der WLAN-Zugangspunkt 9-1 verbunden. Die Sende- und Empfangsantenne 5-1, die in der Passagierkabine verlegt ist, sendet und empfängt somit Signale aller drei WLAN-Zugangspunkte 9-1, 9-2, 9-3. Das Gleiche gilt für die zweite Sende- und Empfangsantenne 5-2, die optional auch in der Passagierkabine verlegt ist, um ein Signalfading zu minimieren.

Bei jedem Sende- und Empfangssignalpfad ist bei der erfindungsgemäßen Vorrichtung jeweils eine Filtereinrichtung vorgesehen, welche die Radiofrequenzbänder bzw. WLAN-Frequenzbänder voneinander und von vorgegebenen Mobilfunkfrequenzbändern, insbesondere Mobilfunkrauschbändern, isoliert. Diese Filtereinrichtung umfasst Kanalfilter 10-i zur Trennung der Radiofrequenzbänder bzw. WLAN-Frequenzbänder, voneinander sowie Bandpassfilter 15-i, 16-i zur Isolation der Radiofrequenzbänder von den Mobilfunkfrequenzbändern, insbesondere von Mobilfunkrauschbändern. Bei der in Fig. 1 dargestellten Ausführungsform befinden sich die Kanalfilter 10-i in der UWBS-Einheit 10 und die Bandpassfilter 15-i, 16-i der beiden Bandpassfiltergruppen 15, 16 in der OBCE-Einheit. Bei den Bandpassfiltern 15-i, 16-i kann es sich um gekoppelte Hohlraumresonatoren bzw. sogenannte Cavityfilter handeln. Wie in Fig. 1 zu erkennen, ist in jedem Sende- und Empfangssignalpfad ein Kanalfilter 10-i zur Trennung von Radiofrequenzbändern, und ein Bandpassfilter 15-i bzw. 16-i zur Isolation der Radiofrequenzbänder von Mobilfunkfrequenzbändern sowie ein Richtkoppler 17 vorgesehen. Beispielsweise ist in dem Sende- und Empfangssignalpfad für den WLAN-Zugangspunkt 9-1 ein Kanalfilter 10-1 für den WLAN-Kanal 6 und seriell dazu verschaltet ein Bandpassfilter 15-2 für diesen Kanal vorgesehen, wobei das Bandpassfilter 15-2 zur Isolation des WLAN-Frequenzbandes bzw. WLAN-Kanals von einem Mobilfunkfrequenzband nämlich einem Mobilfunk-Rauschband vorgesehen ist. Weiterhin führt dieser Signalpfad über den Richtkoppler 17 zu der gemeinsamen Sende- und Empfangsantenne 5-1. Dieser Sende- und Empfangssignalpfad enthält somit in Serie ein Kanalfilter 10-1, ein Bandpassfilter 15-2 und einen Richtkoppler 17. Aufgrund der seriellen Verschaltung des Kanalfilters und eines Bandpassfilters, beispielsweise eines Kanalfilters 10-1 und des Bandpassfilters 15-2, benötigt jedes der beiden Filter für sich nur eine relativ geringe Filtersteilheit, um dennoch eine genügend hohe Stoppbanddämpfung von über 50 dB, vorzugsweise über 70 dB, in dem Signalpfad zu erreichen. Die hohe Stoppbanddämpfung bzw. Rejection, die sich durch serielle Verschaltung des Kanalfilters und des Bandpassfilters ergibt, erlaubt es, die Daten mit einer Datenrate von bis zu 54 MBit/s in den jeweiligen WLAN-Kanälen zu übertragen. Für das Kanalfilter und das zugehörige Bandpassfilter, die jeweils nur eine relativ geringe Filtersteilheit benötigen, kann der technische Aufwand zu deren Implementierung reduziert werden. Insbesondere die Bandpassfilter, bei denen es sich um gekoppelte Hohlraumresonatoren bzw. Cavityfilter handelt, können in einer relativen geringen Baugröße hergestellt werden. Dies ermöglicht es, die Bandpassfilter bzw. Cavityfilter in dem vorhandenen Bauraum des Flugzeuges unterzubringen. Weiterhin wird durch die geringe Größe der Filter Gewicht eingespart und somit bei einem Flugzeug der Treibstoffverbrauch minimiert.

Wie man in Fig. 1 erkennen kann, werden drei zu übertragende Radiofrequenzkanäle, insbesondere WLAN-b/g-Kanäle auf zwei unterschiedlichen Signalpfaden über die Ports W1, W2 der OBCE-Einheit aufgeteilt und den Bandpassfiltergruppen 15, 16 der OBCE-Einheit separat über die beiden Ports zugeführt und anschließend über einen Richtkoppler 17 zusammengeführt und in jeweils gleichen Signalanteilen an die beiden Antennenports A1, A2 bzw. TRX1, TRX2 der OBCE-Einheit geleitet.

Bei dem in Fig. 1 dargestellten Ausführungsbeispiel wird der WLAN-Kanal 6 von den WLAN-Kanälen 1 und 11 separiert und auf die Bandpassfiltergruppe 15 geführt, welche gleichzeitig die OBCE-Rauschbänder mit 2,4 und 2,5 GHz filtert. Durch die Begrenzung des WLAN-Signals auf Kanal 6 bei 2,337 MHz Mittenfrequenz und einer Bandbreite von ca. 18 MHz kann die Bandpassfiltergruppe 15 mit einer relativ geringen Filtersteilheit und geringem Platzbedarf realisiert werden, wobei sie gleichzeitig die benötigte Isolation von den OBCE-Signalquellen bei 2,4 und 2,5 GHz bietet. Durch die Aufteilung der benötigen WLAN-Nachbarkanaldämpfung auf zwei getrennte Filter, nämlich ein WLAN-Kanalfilter und ein Bandpassfilter, wird die Anforderung an die jeweiligen einzelnen Filter entschärft, so dass diese mit relativ geringerem technischem Aufwand realisierbar sind.

Die WLAN-Kanäle 1 und 11 werden bei dem in Fig. 1 dargestellten Ausführungsbeispiel nach ihrer jeweiligen Kanalfilterung durch die Filter 10-2, 10-3 über einen Signalkombinierer 10-4 zusammengeführt bzw. zusammengeschaltet und auf das WLAN-Bandpassfilter 16-2 in der Bandpassfiltergruppe 16 geführt. Die Verwendung eines 2:1 Signalkombinierers bietet zudem den Vorteil, dass die Isolation zwischen den beiden Kanälen um den Betrag der durch den Combiner herbeigeführten Isolation erhöht werden kann. Die beiden WLAN-Kanäle 1, 11 haben zudem den doppelten Frequenzabstand der Mittenfrequenzen (von 55 MHz), wodurch die Wirkung der Kanalfilter deutlich höher ist als zwischen WLAN-Kanal 1 und WLAN-Kanal 6 mit einem Abstand von nur 25 MHz. Die zweite Bandpassfiltergruppe 16 erhält als angrenzende Rauschbänder das Frequenzband von 2110 bis 2170 MHz sowie eventuell auch das Frequenzband von 3400 bis 3600 MHz. Die beiden Rauschbänder besitzen einen ausreichend großen Frequenzabstand zu dem WLAN-Frequenzband, so dass in der zweiten Bandpassfiltergruppe 16 auch die erforderliche Isolation der Signalquellen bei vorgegebenem Bauraum realisiert werden kann.

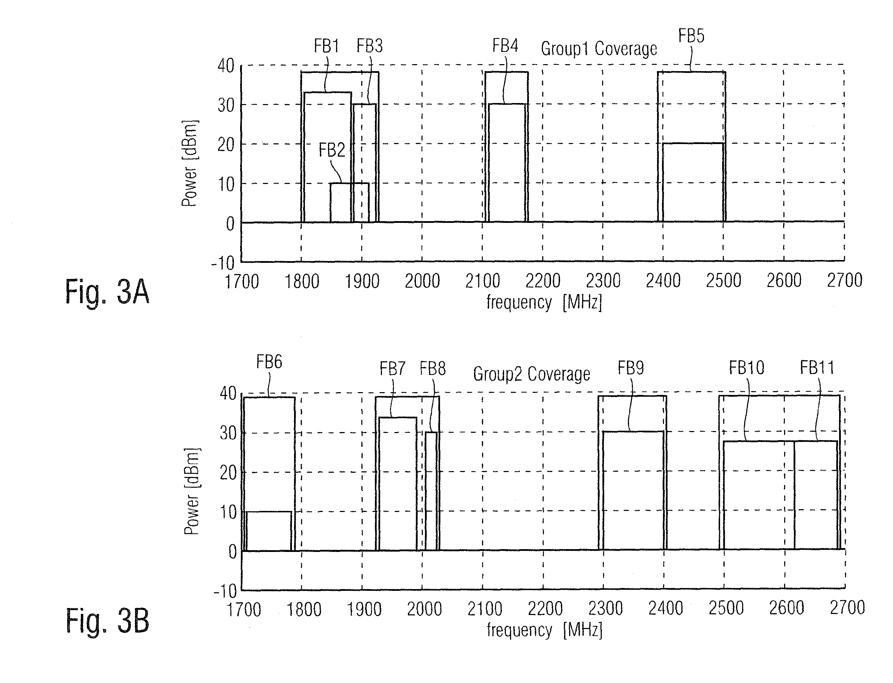

Die Fig. 3A, 3B zeigen Signalspektren zur Erläuterung eines möglichen Ausführungsbeispiels der erfindungsgemäßen Vorrichtung 1. Die gezeigten Signalspektren im Bereich von 1700 bis 2700 MHz umfassen verschiedene Radiofrequenzbänder FB, insbesondere WLAN-Frequenzbänder sowie Mobilfunk-Frequenzbänder. Bei dem Frequenzband FB1 handelt es sich um ein GSM 1800 Sendefrequenzband, das teilweise mit einem Frequenzband FB2 überlappt. Dieses Frequenzband FB2 ist ein GSM 1900 Empfangsfrequenzband. Weiterhin ist ein Frequenzband FB3 vorgesehen, das unmittelbar neben dem Frequenzband FB1 liegt. Weiterhin zeigt Fig. 3A ein UMTS Frequenzband FB4 und ein WLAN-Frequenzband FB5.

Fig. 3B stellt weitere Frequenzbänder dar, die in dem gleichen Frequenzbereich von 1700 bis 2700 MHz liegen. Bei dem Frequenzband FB6 handelt es sich um ein GSM 1800 Empfangsfrequenzband. Das Frequenzband FB7 ist ein GSM 1900 Sendefrequenzband. Daneben liegt ein Frequenzband FB8, bei dem es sich um ein UMTS-CDMA Frequenzband handelt. Weiterhin ist ein Frequenzband FB9 dargestellt, bei dem es sich um ein chinesisches Mobilfunk-Frequenzband handelt. Ein weiteres Frequenzband FB10 ist ein 4G-Mobilfunkband, um das ein bestehendes Mobilfunkband FB11 erweitert wird. Die in den Fig. 3B, 3A dargestellten Frequenzbänder FB liegen, wie aus den Figuren ersichtlich, zum Teil eng aneinander. Für aneinander anliegende Frequenzbänder sind separate Bandpassfiltergruppen vorgesehen, die hintereinander frequenzversetzte Bandpassfilter aufweisen und jeweils mit einem Eingang eines Richtkopplers, beispielsweise des Richtkopplers 17 verbunden sind. Der Richtkoppler 17 kombiniert die von unterschiedlichen Bandpassfiltergruppen, beispielsweise den Bandpassfiltergruppen 15, 16 stammenden Signalspektren gefilterter Hochfrequenzsignale und gibt diese an eine gemeinsame Sende- und Empfangsantenne, beispielsweise an die Sende- und Empfangsantenne 5-1 ab. Die eng aneinanderliegenden Frequenzbänder FB werden somit durch Bandpassfilter separater Bandpassfiltergruppen, beispielsweise der Bandpassfiltergruppen 15, 16 gefiltert, die zur Entzerrung der aneinander anliegenden Frequenzbänder zueinander frequenzversetzte Bandpassfilter enthalten. Die Bandpassfilter sind gewissermaßen kammartig zueinander frequenzversetzt, wie in den Fig. 3A, 3B dargestellt.

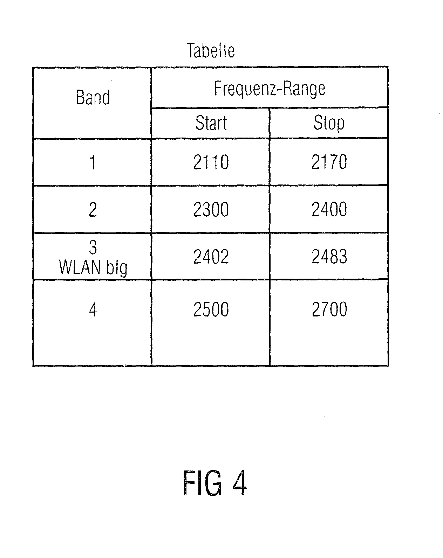

Fig. 4 zeigt eine Tabelle möglicher Frequenzbänder FB mit ihren zugehörigen Bandbreiten BW, wie sie bei einer möglichen Ausführungsform der erfindungsgemäßen Vorrichtung vorhanden sind. Jedes Frequenzband liegt zwischen einer Start- und einer Stoppfrequenz und weist eine bestimmte Frequenzbandbreite BW (bandwidth) auf. Das Zusammenführen aller OBCE und WLAN b/g-Signale erfordert eine ausreichende Hochfrequenzisolation der Signalquellen voneinander wie dies bei der erfindungsgemäßen Vorrichtung erreicht wird.

Durch die spezielle Anordnung von Filtern, Richtkopplern sowie zwei Bandpassfiltergruppen mit kammartig zueinander versetzten Bandpassfiltern sowie zwei Leckleitungsantennen 5-1, 5-2 lassen sich bei der erfindungsgemäßen Vorrichtung alle weltweit vorhandenen Telefon- und Wireless-LAN-Frequenzen in einer Flugzeugkabine abdecken und sind für Passagiere nutzbar. Bei der erfindungsgemäßen Vorrichtung können zudem die bisher verwendeten Notchfilter entfallen. Dies führt zu einer Verringerung der Durchgangsdämpfung. Durch die erfindungsgemäße Wireless-Systemarchitektur können Radiofrequenzbänder für Datenübertragung und Mobilfunk-Frequenzbänder ohne Performance-Verluste der WLAN-Kanäle auf eine gemeinsame Empfangsantenne zusammengeführt werden.

Die erfindungsgemäße Vorrichtung eignet sich vor allem für den Einsatz in Flugzeugen, kann aber auch bei sonstigen Übertragungssystemen eingesetzt werden, bei denen Radiofrequenzsignale, die in verschiedenen vorgehenden Radiofrequenzbändern gesendet oder empfangen werden, über eine gemeinsame Sende- und Empfangsantenne übertragen werden. Die erfindungsgemäße Vorrichtung bzw. Systemarchitektur eignet sich somit auch für Übertragungssysteme, die WLAN-Signale und Mobilfunksignale, deren Frequenzbänder eng aneinander liegen, über die gleiche Sende- und Empfangsantenne ausstrahlen und empfangen. Die erfindungsgemäße Vorrichtung bzw. Systemarchitektur eignet sich insbesondere für das Senden und Empfangen von WLAN IEEE 802.11 b/g Signalen sowie Mobilfunksignalen, insbesondere 4G-Mobilfunksignalen über die gleiche Sende- und Empfangsantenne.

## Patentansprüche

1. Vorrichtung zur Bereitstellung von RadiofrequenzSignalverbindungen für Nutzer in einem Flugzeug, mit:
einer ersten gemeinsamen Sende- und Empfangsantenne (5-1), welche dazu ausgelegt ist, WLAN-Signale und Mobilfunksignale in dem Flugzeug zu senden und zu empfangen;
**gekennzeichnet durch**
einen ersten WLAN-Zugangspunkt (9-1), welcher über einen ersten Sende- und Empfangspfad, welcher ein erstes Kanalfilter (10-1) zum Filtern eines ersten WLAN-Kanals (Ch 6) und ein erstes Bandpassfilter (15-2) aufweist, mit der ersten gemeinsamen Sende- und Empfangsantenne (5-1) verbunden ist; und
einen zweiten WLAN-Zugangspunkt (9-2), welcher über einen zweiten Sende- und Empfangspfad, welcher ein zweites Kanalfilter (10-2) zum Filtern eines zweiten WLAN-Kanals (Chan 1) und ein zweites Bandpassfilter (16-2) aufweist, mit der ersten gemeinsamen Sende- und Empfangsantenne (5-1) verbunden ist,
wobei das erste Bandpassfilter (15-2) in einer ersten Bandpassfiltergruppe (15) angeordnet ist, welche dazu ausgelegt ist, erste Mobilfunkfrequenzbänder zu übertragen,
wobei die Mittenfrequenz des ersten WLAN-Kanals (Ch 6) weiter von den Frequenzen der ersten Mobilfunkfrequenzbänder beabstandet ist als die Mittenfrequenzen des zweiten WLAN-Kanals (Chan 1).

2. Vorrichtung nach Anspruch 1, weiterhin mit:
einem dritten WLAN-Zugangspunkt (9-3), welcher über ein drittes Kanalfilter (10-3) zum Filtern eines dritten WLAN-Kanals (Chan 11) mit dem zweiten Bandpassfilter (16-2) verbunden ist.

3. Vorrichtung nach Anspruch 2, weiterhin mit:
einem Signalkombinierer (10-4), welcher dazu ausgelegt ist, die von dem zweiten und dem dritten Kanalfilter ausgegebenen WLAN-Signale zu kombinieren.

4. Vorrichtung nach Anspruch 3,
wobei der Signalkombinierer (10-4) ein Wilkinsonkoppler ist.

5. Vorrichtung nach einem der Ansprüche 3 und 4,
wobei der Abstand der Mittenfrequenzen des zweiten und dritten WLAN-Kanals (Chan 1; Chan 11) größer ist als der Abstand der Mittenfrequenzen des ersten und des zweiten WLAN-Kanals (Ch 6; Chan 1).

6. Vorrichtung nach einem der vorhergehenden Ansprüche, wobei das zweite Bandpassfilter (16-2) in einer zweiten Bandpassfiltergruppe (16) angeordnet ist, welche dazu ausgelegt ist, zweite Mobilfunkfrequenzbänder zu übertragen, und
wobei der Abstand der Mittenfrequenzen des ersten WLAN-Kanals (Ch 6) und der ersten Mobilfunkfrequenzbänder kleiner ist als der Abstand der Mittenfrequenzen des ersten WLAN-Kanals (Ch 6) und der zweiten Mobilfunkfrequenzbänder.

7. Vorrichtung nach einem der vorhergehenden Ansprüche, weiterhin mit:
einer zweiten gemeinsamen Sende- und Empfangsantenne (5-2);
wobei die ersten und zweiten WLAN-Zugangspunkte (9-1; 9-2) mit der zweiten gemeinsamen Sende- und Empfangsantenne (5-2) verbunden sind.

8. Vorrichtung nach Anspruch 7,
wobei die erste gemeinsame Sende- und Empfangsantenne (5-1) dazu ausgelegt ist, Radiofrequenzsignale zu senden, und die zweite gemeinsame Sende- und Empfangsantenne (5-2) dazu ausgelegt ist, Radiofrequenzsignale zu empfangen.

9. Vorrichtung nach Anspruch 6 oder einem der vorhergehenden Ansprüche, wenn auf Anspruch 6 rückbezogen,
wobei die ersten und zweiten Mobilfunkfrequenzbänder Mobilfunkrauschbänder aufweisen, in den Rauschsignale gesendet werden, die Mobilfunkverbindungen von in dem Flugzeug befindlichen Endgeräten mit terrestrischen Basisstationen verhindern.

10. Vorrichtung nach einem der vorhergehenden Ansprüche, weiterhin mit:
einem Richtkoppler (17), welcher dazu ausgelegt ist, die WLAN-Signale und Mobilfunksignale zusammenzuführen und an die erste und/oder zweite gemeinsame Sende- und Empfangsantenne (5-1, 5-2) abzugeben.

11. Vorrichtung nach Anspruch 10,
wobei der Richtkoppler (17) ein 3dB Richtkoppler ist, und Hybridkombinationsschaltungen, Lange-Koppler oder Wilkinsonkoppler aufweist.

12. Vorrichtung nach einem der Ansprüche 10 und 11,
wobei der Richtkoppler (17) zwei Ausgänge aufweist, die jeweils über einen Triplexer mit der ersten gemeinsamen Sende- und Empfangsantenne (5-1) verbunden sind.

13. Vorrichtung nach einem der vorhergehenden Ansprüche,
wobei die ersten und zweiten Bandpassfilter (15-2, 16-2) gekoppelte Hohlraumresonatoren und/oder keramische Leitungsresonatoren aufweisen.

14. Vorrichtung nach einem der vorhergehenden Ansprüche,
wobei die ersten und zweiten WLAN-Zugangspunkte (9-1, 9-2) in dem Flugzeug über ein Netzwerk (22) an einen Flugzeugserver (23) angeschlossen sind, der über eine Satellitenstrecke mit einer Bodenstation verbunden ist.

15. Vorrichtung nach einem der vorhergehenden Ansprüche,
wobei die WLAN-Signale WLAN-Service-Signale nach dem Standard IEEE 802.11g oder IEEE 802.11b umfassen.

16. Vorrichtung nach einem der vorhergehenden Ansprüche,
wobei die erste gemeinsame Sende- und Empfangsantenne (5-1) eine Leckleitungsantenne ist, die in einer Passagierkabine des Flugzeugs verlegt ist.

17. Vorrichtung nach Anspruch 16,
wobei an einem Ende der Leckleitungsantenne (5-1) eine Messeinrichtung (50R) vorgesehen ist, welche dazu ausgelegt ist, die Signalleistung von Hochfrequenzsignalen an einem Ende der Leckleitungsantenne (5-1) zu messen.

18. Vorrichtung nach einem der vorhergehenden Ansprüche,
wobei über den ersten und zweiten Sende- und Empfangssignalpfad jeweils Daten mit einer Datenübertragungsrate von bis zu 54 MBit/s übertragen werden.

19. Vorrichtung nach einem der vorhergehenden Ansprüche,
wobei die ersten und zweiten Kanalfilter (10-1, 10-2) in einer Universal Wireless Backbone System, UWBS,-Einheit (10) bzw. RF-Kombinationseinheit angeordnet sind.

20. Vorrichtung nach einem der vorhergehenden Ansprüche,
wobei die ersten und zweiten Bandpassfilter (15-2, 16-2) in einer On Board Control Equipment, OBCE,-Einheit des Flugzeuges angeordnet sind.

21. Vorrichtung nach Anspruch 2,
wobei die ersten, zweiten und dritten WLAN-Kanäle jeweils eine Frequenzbandbreite von 20 MHz aufweisen.

22. Vorrichtung nach Anspruch 6 oder einem der vorhergehenden Ansprüche, wenn auf Anspruch 6 rückbezogen,
wobei die ersten und zweiten Mobilfunkfrequenzbänder 4G-Mobilfunkfrequenzbänder sind.

## Claims

1. Device for providing radiofrequency signal connections for users in an aeroplane, comprising:
- a first joint transmitter and receiver antenna (5-1), which is configured to transmit and receive WLAN signals and mobile radio signals in the aeroplane;
**characterised by**
- a first WLAN access point (9-1), which is connected to the first joint transmitter and receiver antenna (5-1) via a first transmission and reception path, which comprises a first channel filter (10-1) for filtering a first WLAN channel (Ch 6) and a first band-pass filter (15-2); and
- a second WLAN access point (9-2), which is connected to the first joint transmitter and receiver antenna (5-1) via a second transmission and reception path, which comprises a second channel filter (10-2) for filtering a second WLAN channel (Ch 1) and a second band-pass filter (16-2),
the first band-pass filter (15-2) being arranged in a first band-pass filter group (15) which is configured to transmit first mobile radio frequency bands,
the centre frequency of the first WLAN channel (Ch 6) being further away than the centre frequencies of the second WLAN channel (Chan 1) from the frequencies of the first mobile radio frequency bands.

2. Device according to claim 1, further comprising:
- a third WLAN access point (9-3), which is connected to the second band-pass filter (16-2) via a third channel filter (10-3) for filtering a third WLAN channel (Chan 11).

3. Device according to claim 2, further comprising:
- a signal combiner (10-4), which is configured to combine the WLAN signals emitted by the second and third channel filters.

4. Device according to claim 3, wherein the signal combiner (10-4) is a Wilkinson coupler.

5. Device according to any of claims 3 to 4, wherein the distance between the centre frequencies of the second and third WLAN channels (Chan 1; Chan 11) is greater than the distance between the centre frequencies of the first and second WLAN channels (Ch 6; Chan 1).

6. Device according to any of the preceding claims,
wherein the second band-pass filter (16-2) is arranged in a second band-pass filter group (16), which is configured to transmit second mobile radio frequency bands, and wherein the distance between the centre frequencies of the first WLAN channel (Ch 6) and the first mobile radio frequency bands is less than the distance between the centre frequencies of the first WLAN channel (Ch 6) and the second mobile radio frequency bands.

7. Device according to any of the preceding claims, further comprising:
- a second joint transmitter and receiver antenna (5-2) ;
wherein the first and second WLAN access points (9-1; 9-2) are connected to the second joint transmitter and receiver antenna (5-2).

8. Device according to claim 7, wherein the first joint transmitter and receiver antenna (5-1) is configured to transmit radiofrequency signals, and the second joint transmitter and receiver antenna (5-2) is configured to receive radiofrequency signals.

9. Device according to claim 6 or any of the preceding claims when dependent on claim 6, wherein the first and second mobile radio frequency bands comprise mobile radio noise bands, in which noise signals are transmitted which prevent mobile radio connections from terminals located in the aeroplane to terrestrial base stations.

10. Device according to any of the preceding claims, further comprising:
- a directional coupler (17), which is configured to bring together the WLAN signals and mobile radio signals and deliver them to the first and/or second joint transmitter and receiver antenna (5-1, 5-2).

11. Device according to claim 10, wherein the directional coupler (17) is a 3 dB directional coupler and comprises hybrid combination circuits, long couplers or Wilkinson couplers.

12. Device according to either claim 10 or claim 11, wherein the directional coupler (17) comprises two outputs, which are each connected to the first joint transmitter and receiver antenna (5-1) via a triplexer.

13. Device according to any of the preceding claims, wherein the first and second band-pass filters (15-2, 16-2) comprise coupled cavity resonators and/or ceramic line resonators.

14. Device according to any of the preceding claims, wherein the first and second WLAN access points (9-1, 9-2) in the aeroplane are connected via a network (22) to an aeroplane server (23), which is connected to a ground station via a satellite path.

15. Device according to any of the preceding claims, wherein the WLAN signals comprise WLAN service signals in accordance with standard IEEE 802.11g or IEE 802.11b.

16. Device according to any of the preceding claims, wherein the first joint transmitter and receiver antenna (5-1) is a leakage line antenna which is laid in a passenger cabin of the aeroplane.

17. Device according to claim 16, wherein a measurement device (50R) is provided at one end of the leakage line antenna (5-1) and is configured to measure the signal power of high-frequency signals at one end of the leakage line antenna (5-1).

18. Device according to any of the preceding claims, wherein data are transferred via each of the first and second transmission and reception signal paths at a data transfer rate of 54 Mbit/s.

19. Device according to any of the preceding claims, wherein the first and second channel filters (10-1, 10-2) are arranged in a universal wireless backbone system/UWBS unit (10) or an RF combination unit.

20. Device according to any of the preceding claims, wherein the first and second band-pass filter (15-2, 16-2) are arranged in an on-board control equipment/OBCE unit of the aeroplane.

21. Device according to claim 2, wherein the first, second and third WLAN channels each have a frequency bandwidth of 20 MHz.

22. Device according to claim 6 or any of the preceding claims when dependent on claim 6, wherein the first and second mobile radio frequency bands are 4G mobile radio frequency bands.

## Revendications

1. Dispositif permettant d'obtenir des liaisons par signaux de radiofréquence pour des utilisateurs dans un avion, comportant :
- une première antenne commune d'émission et de réception (5-1), qui est conçue pour émettre et recevoir des signaux WiFi et des signaux de téléphonie mobile dans l'avion ;
**caractérisé par**
- un premier point d'accès Wi-Fi (9-1), qui est relié à la première antenne commune d'émission et de réception (5-1) par l'intermédiaire d'un premier chemin d'émission et de réception, qui présente un premier filtre de canal (10-1) destiné à filtrer un premier canal WiFi (Ch 6) et un premier filtre de passe-bande (15-2) ; et
- un second point d'accès Wi-Fi (9-2), qui est relié à la seconde antenne commune d'émission et de réception (5-1) par l'intermédiaire d'un second chemin d'émission et de réception, qui présente un second filtre de canal (10-2) destiné à filtrer un second canal WiFi (Chan 1) et un second filtre de passe-bande (16-2),
le premier filtre passe-bande (15-2) étant disposé dans un premier groupe de filtres passe-bande (15), qui est conçu pour transmettre des premières bandes de fréquence de téléphonie mobile,
la fréquence moyenne du premier canal WiFi (Ch 6) étant plus éloignée des fréquences des premières bandes de fréquence de téléphonie mobile que les fréquences moyennes du second canal WiFi (Chan 1).

2. Dispositif selon la revendication 1, comprenant en outre :
- un troisième point d'accès Wi-Fi (9-3), qui est relié au second filtre de passe-bande (16-2) par l'intermédiaire d'un troisième filtre de canal (10-3) pour filtrer un troisième canal WiFi (Chan 11).

3. Dispositif selon la revendication 2, comprenant en outre :
- un combineur de signaux (10-4), qui est conçu pour combiner les signaux WiFi émis par le second et par le troisième filtre de canal.

4. Dispositif selon la revendication 3, le combineur de signaux (10-4) étant un coupleur de Wilkinson.

5. Dispositif selon l'une des revendications 3 et 4, la distance des fréquences moyennes du second et troisième canal WiFi (Chan 1 ; Chan 11) étant supérieure à la distance des fréquences centrales du premier et du second canal WiFi (Ch 6 ; Chan 1).

6. Dispositif selon l'une des revendications précédentes, le second filtre passe-bande (16-2) étant disposé dans un second groupe de filtres passe-bande (16), qui est conçu pour transmettre des secondes bandes de fréquence de téléphonie mobile, et
la distance des fréquences moyennes du premier canal WiFi (Ch 6) et des premières bandes de fréquence de téléphonie mobile étant inférieure à la distance des fréquences moyennes du premier canal WiFi (Ch 6) et des secondes bandes de fréquence de téléphonie mobile.

7. Dispositif selon l'une des revendications précédentes, comprenant en outre :
- une seconde antenne commune d'émission et de réception (5-2) ;
les premiers et seconds points d'accès WiFi (9-1 ; 9-2) étant reliés à la seconde antenne d'émission et de réception (5-2).

8. Dispositif selon la revendication 7, la première antenne commune d'émission et de réception (5-1) étant conçue pour envoyer des signaux de radiofréquence, et la seconde antenne commune d'émission et de réception (5-2) étant conçue pour recevoir des signaux de radiofréquence.

9. Dispositif selon la revendication 6 ou selon l'une des revendications précédentes, lorsqu'elle dépend de la revendication 6, les premières et secondes bandes de fréquence de téléphonie mobile présentant des bandes de bruit de téléphonie mobile, dans lesquelles des signaux de bruit sont émis, qui empêchent des connexions de téléphonie mobile d'appareils terminaux se trouvant dans l'avion avec des stations de base terrestres.

10. Dispositif selon l'une des revendications précédentes, comprenant en outre :
- un coupleur directif (17), qui est conçu pour réunir les signaux WiFi et les signaux de téléphonie mobile et les remettre à la première et/ou seconde antenne commune d'émission et de réception (5-1, 5-2).

11. Dispositif selon la revendication 10, le coupleur directif (17) étant un coupleur directif 3dB, et présentant des circuits de combinaison hybrides, des coupleurs de Lange ou des coupleurs de Wilkinson.

12. Dispositif selon l'une des revendications 10 et 11, le coupleur directif (17) présentant deux sorties, qui sont reliées respectivement par l'intermédiaire d'un triplexeur à la première antenne commune d'émission et de réception (5-1).

13. Dispositif selon l'une des revendications précédentes, les premiers et seconds filtres de passe-bande (15-2, 16-2) présentant des cavités résonantes et/ou des résonateurs de conduite en céramique.

14. Dispositif selon l'une des revendications précédentes, les premiers et seconds points d'accès WiFi (9-1, 9-2) étant reliés dans l'avion par l'intermédiaire d'un réseau (22) à un serveur d'avion (23), qui est relié par l'intermédiaire d'une liaison par satellite à une station au sol.

15. Dispositif selon l'une des revendications précédentes, les signaux WiFi comprenant des signaux de service WiFi conformes à la norme IEEE 802.11g ou IEEE 802.11b.

16. Dispositif selon l'une des revendications précédentes, la première antenne commune d'émission et de réception (5-1) étant une antenne à conduite de fuite qui est posée dans une cabine passagers de l'avion.

17. Dispositif selon la revendication 16, un dispositif de mesure (50R) étant prévu à une extrémité de l'antenne à conduite de fuite (5-1), qui est conçu pour mesurer la puissance de signal de signaux de haute fréquence au niveau d'une extrémité de l'antenne à conduite de fuite (5-1).

18. Dispositif selon l'une des revendications précédentes, des données étant respectivement transmises à une vitesse de transmission de données allant jusqu'à 54 Mbits/s par l'intermédiaire du premier et du second chemin de signal d'émission et de réception.

19. Dispositif selon l'une des revendications précédentes, les premiers et seconds filtres de canal (10-1, 10-2) étant disposés dans une unité Universal Wireless Backbone System, UWBS (10) ou dans une unité de combinaison RF.

20. Dispositif selon l'une des revendications précédentes, les premiers et seconds filtres de passe-bande (15-2, 16-2) étant disposés dans une unité On Board Control Equipment, OBCE de l'avion.

21. Dispositif selon la revendication 2, les premiers, seconds et troisièmes canaux WLAN présentant respectivement une largeur de bande de fréquence de 20 MHz.

22. Dispositif selon la revendication 6 ou selon l'une des revendications précédentes, lorsqu'elle dépend de la revendication 6, les premières et secondes bandes de fréquence de téléphonie mobile étant des bandes de fréquence de téléphonie mobile 4G.
